# FASCICULE DE BREVET EUROPEEN

(11) **EP 2 141 458 B1**
(45) Date de publication et mention de la délivrance du brevet: **16.03.2011**
(21) Numéro de dépôt: 09163729.8
(22) Date de dépôt: 25.06.2009
(51) Int. Cl.: G01C 23/00, G06F 3/048

(54) **Procédé de gestion d'un ensemble de visualisation comprenant une centrale de mixage vidéo et un système de visualisation de cockpit**
Steuerverfahren einer Anzeigeeinheit, die eine Videomischzentrale und ein Cockpit-Anzeigesystem umfasst
Method for managing a viewing unit comprising a video mixing centre and a cockpit viewing system

(30) Priorité: 04.07.2008 FR 0803817
(43) Date de publication de la demande: 06.01.2010
(73) Titulaire: THALES, 92200 Neuilly-sur-Seine (FR)
(72) Inventeur: Bonnet, Denis, 33000 Bordeaux (FR)
(74) Mandataire: Bréda, Jean-Marc

(56) Documents cités:
- FR-A- 2 357 022
- FR-A- 2 905 191
- US-A1- 2007 013 693
- US-A1- 2008 119 969

## Description

Le domaine de l'invention est celui des systèmes de visualisation de cockpit d'aéronef, plus connus sous le terme de CDS signifiant « Cockpit Display System » et plus particulièrement ceux ayant les capacités de gérer et d'afficher des images vidéo. Depuis quelques années, les aéronefs de nouvelle génération possèdent un système vidéo permettant, par le biais d'une centrale de mixage vidéo dite CMV, d'afficher sur les écrans de visualisation de planche de bord, des flux vidéo issus de plusieurs sources qui peuvent être, par exemple, des caméras disposées à l'intérieur ou à l'extérieur de l'appareil. On utilise préférentiellement une centrale de mixage afin d'éviter de développer dans le CDS, et dans chacun des écrans plus particulièrement, des ressources de mixage vidéo. On centralise ainsi ce service. La CMV fusionne l'ensemble des flux vidéo qu'il lui est demandé de fusionner en un seul flux vidéo de la taille de l'écran cible, éventuellement pourvu de surfaces noires correspondant aux portions de l'écran sur lesquelles aucun flux vidéo n'est requis. Ce flux vidéo est ensuite affiché sur un des écrans du CDS en fond d'écran.

Parallèlement à cette évolution, les planches de bord comportent de moins en moins d'écrans, la taille des écrans étant de plus en plus grande. Pour afficher la même quantité d'informations, on utilise des « fenêtres ». Ainsi, un seul écran peut comporter plusieurs fenêtres d'affichage. Dans ce type de cockpit, il est donc nécessaire d'afficher de manière coordonnée, et parfois sous forme de fenêtres, les images vidéo.

La gestion des « Cockpit Display System » a fait l'objet d'une norme récente appelée ARINC 661 qui définit et normalise la définition d'un CDS et les communications entre le CDS et l'extérieur. Cette norme a été adoptée en 2001 et mise en oeuvre, par exemple, dans le développement et l'industrialisation de l'Airbus A380. On se reportera au document intitulé : « Cockpit Display System interface to User Systems » ARINC 661-2, AEEC/ARINC du 30 juin 2005 pour toutes informations complémentaires sur cette norme. Le procédé de gestion selon l'invention s'applique tout particulièrement dans le cadre de cette norme ARINC.

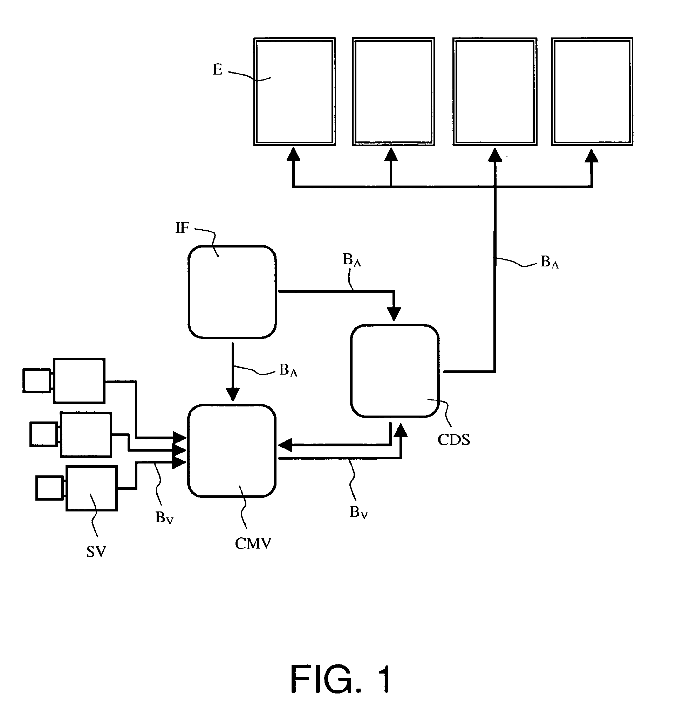

Plus précisément, comme indiqué sur la figure 1, les architectures CDS actuelles sont basées sur trois éléments principaux qui sont :
- Une Centrale de Mixage Vidéo noté CMV disposant de plusieurs entrées et d'une sortie vidéo, les entrées étant raccordées au moyen de bus vidéo Bᵥ à des systèmes vidéo SV tels que des caméras ;
- Une interface IF apte à générer une fonction F de sélection de vidéo demandant l'affichage d'une vidéo particulière raccordée au CMV et au CDS par l'intermédiaire du bus avion B_{A} ;
- Un système d'affichage de cockpit noté CDS (Cockpit Display System) et disposant d'une entrée vidéo raccordée à la CMV et de sorties raccordées aux écrans de visualisation E. Ce CDS est pourvu d'un gestionnaire de fenêtres dont la principale caractéristique est de convertir les coordonnées des interfaces homme-machine qui lui sont adressées de coordonnées relatives (positionnement dans une fenêtre) en coordonnées absolues (coordonnées dans un écran) ;

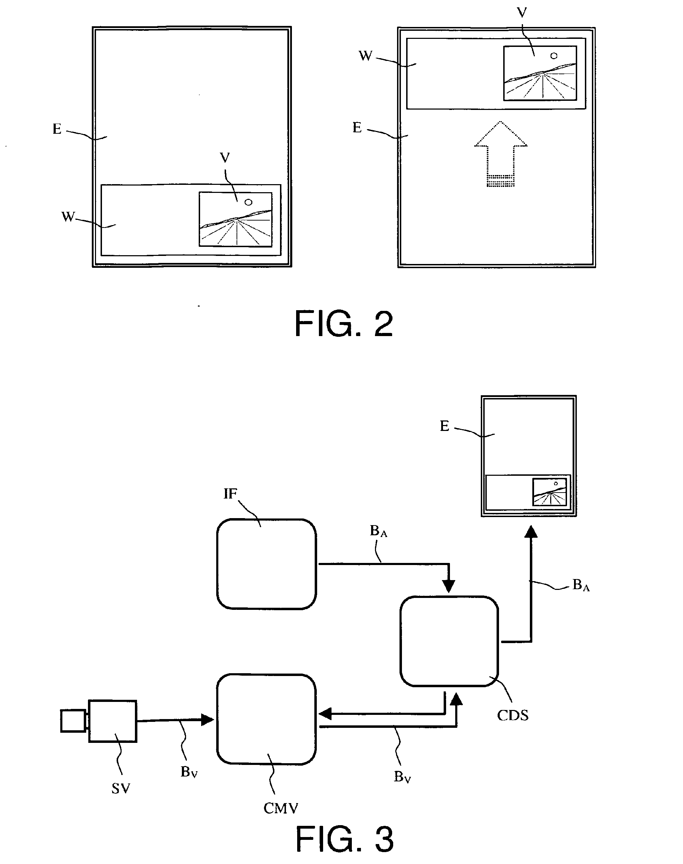

Un des points délicats de la gestion de l'affichage est illustré en figure 2. La fonction F doit demander l'affichage de son interface homme machine au CDS dans une fenêtre W mais elle ne maîtrise pas le positionnement de cette fenêtre W sur l'écran de visualisation E. Seul, le CDS est maître de ce positionnement, qui varie en fonction de la configuration du système et des actions de l'opérateur, qui a pu, par exemple, repositionner cette fenêtre. Par exemple, sur la figure 2, la fenêtre W comportant l'interface homme-machine IHM et la vidéo V est affichée une première fois en bas de l'écran et une seconde fois en haut de l'écran.

Aussi, pour afficher sur un écran un flux vidéo V dans une fenêtre W comportant une Interface Homme-Machine, le procédé actuellement utilisé est le suivant :
- La fonction F envoie une première requête d'affichage d'une fenêtre W comportant l'interface homme-machine IHM et l'emplacement d'une vidéo particulière au CDS. Cette requête, comme il a été dit, est transmise en coordonnées relatives ;
- La fonction F envoie, parallèlement, une seconde requête d'affichage de la vidéo au CMV. Cette seconde requête est transmise en coordonnées absolues ;
- Le CDS exécute la première requête et détermine le positionnement de la fenêtre W (et donc traduit les coordonnées relatives en coordonnées absolues) et y affiche l'IHM, vidéo exclue;
- Le CMV exécute la seconde requête : elle sélectionne le flux vidéo choisi, le positionne en cohérence avec la requête de la fonction F et le transmet au CDS ;
- Le CDS reçoit le flux vidéo mis en forme du CMV et le transmet à l'écran.

Les principales limitations de l'approche actuelle sont les suivantes :
- Dépendance entre la fonction F et le CDS : La fonction F doit connaître précisément la logique de positionnement des fenêtres du CDS pour pouvoir envoyer la requête de flux vidéo en coordonnée absolue ;
- Cohérence : les deux chaînes de commande n'étant pas synchronisées, l'affichage résultant peut devenir incohérent (affichage transitoire de l'IHM sans la vidéo ou de la vidéo sans l'IHM) ;
- Fonctionnalité : Dans l'architecture actuelle, le déplacement d'une fenêtre contenant un flux vidéo par le curseur dans le CDS au moyen des fonctions « glisser / déposer » est impossible puisque le CDS ne pilote pas le positionnement de la vidéo.

Le brevet FR-A-2 905 191 décrit un dispositif de dialogue d'aéronef comportant des moyens pour désactiver des couches d'une fenêtre interactive qui sont associés à des systèmes de l'aéronef non sélectionnés. Cette solution ne répond pas aux problèmes posés.

Le but de l'invention est de fournir une architecture capable de :
- Permettre l'affichage de vidéo dans des fenêtres ;
- Coordonner l'affichage de ces vidéos avec celui des autres éléments d'une interface homme machine ;
- Simplifier la centrale de mixage ;
- Simplifier l'architecture système et la topologie du réseau

La solution proposée est basée sur le principe de faire piloter la CMV par le CDS. L'architecture système est différente de celle de l'art antérieur dans la mesure où le lien fonctionnel entre la fonction F et le CMV est rompu. Pour les applications en ARINC 661, les fonctions envoient alors au CDS des requêtes d'IHM incluant l'aspect vidéo (identifiant de la zone d'affichage, identifiant du flux vidéo) par le biais de l'objet appelé « externalSource » selon la norme ARINC 661.

Plus précisément, l'invention a pour objet un procédé de gestion d'un ensemble de visualisation de cockpit comprenant au moins une centrale de mixage vidéo CMV, un système de visualisation de cockpit CDS, une interface de sélection de vidéos et un écran d'affichage, la centrale de mixage vidéo étant reliée par un bus vidéo au système de visualisation de cockpit et l'interface de sélection de vidéos étant reliée au système de visualisation de cockpit par un bus avion, caractérisé en ce que la génération, par le système de visualisation de cockpit, d'une image graphique comportant une fenêtre d'affichage comprenant une image vidéo comporte les étapes suivantes :
- L'interface de sélection envoie une requête d'affichage d'une fenêtre W comportant une interface homme-machine IHM et l'emplacement d'une image vidéo V au système de visualisation de cockpit CDS, les coordonnées de l'interface et de l'image vidéo étant définies en coordonnées relatives à la fenêtre d'affichage ;
- Le système de visualisation de cockpit CDS détermine le positionnement graphique de la fenêtre W, l'interface homme-machine et les paramètres d'affichage de l'image vidéo sur l'écran d'affichage en coordonnées absolues ;
- Le système de visualisation de cockpit CDS envoie une demande d'affichage de ladite image vidéo à la centrale de mixage vidéo CMV en coordonnées absolues par rapport à l'écran d'affichage ;
- La centrale de mixage vidéo CMV sélectionne l'image vidéo à afficher, la met en forme et la positionne en coordonnées absolues en fonction de la demande issue du système de visualisation de cockpit CDS et la lui transmet ;
- Le système de visualisation de cockpit CDS reçoit l'image vidéo mise en forme et la transmet à l'écran d'affichage. Elle se positionne donc naturellement dans la fenêtre d'affichage W à l'emplacement choisi.

Avantageusement, les paramètres d'affichage comprennent la définition d'un masque vidéo.

Préférentiellement, lorsque les dialogues entre la centrale de mixage vidéo CMV, le système de visualisation de cockpit CDS et l'interface de sélection de vidéos sont effectués selon la norme aéronautique « ARINC 661 », les requêtes d'affichage d'IHM incluant l'aspect vidéo sont effectués par le biais de l'objet appelé « externalSource » selon la norme ARINC 661.

De plus, lorsque le système de visualisation de cockpit CDS envoie une demande d'affichage d'une image vidéo à la centrale de mixage vidéo CMV, il envoie également un identifiant unique spécifique à ladite demande et lorsque la centrale de mixage vidéo CMV transmet la dite image vidéo au système de visualisation de cockpit, le dit identifiant est également retransmis.

Enfin, le système garanti l'affichage de l'interface homme machine avant celui de la vidéo. Ainsi, tant que l'image vidéo n'est pas transmise par la centrale de mixage vidéo CMV au système de visualisation de cockpit CDS, celui-ci affiche à l'emplacement choisi une information pré-définie.

L'invention sera mieux comprise et d'autres avantages apparaîtront à la lecture de la description qui va suivre donnée à titre non limitatif et grâce aux figures annexées parmi lesquelles :
La figure 1 représente un ensemble de gestion de visualisations comprenant un « Cockpit Display system » ;
La figure 2 représente les différents emplacements possibles d'une fenêtre graphique sur un écran de visualisation ;
La figure 3 représente un ensemble de gestion de visualisations mettant en oeuvre le procédé selon l'invention ;
La figure 4 représente la gestion temporelle d'une fenêtre vidéo sur un écran de visualisation.

La figure 3 représente l'ensemble du dispositif de visualisation mettant en oeuvre le procédé de gestion des flux vidéo selon l'invention. Il comprend essentiellement une Centrale de Mixage Vidéo disposant de plusieurs entrées raccordées au moyen de bus vidéo à des systèmes vidéo tels des caméras et d'une sortie vidéo, un système d'affichage de cockpit noté CDS et disposant d'une entrée vidéo raccordée à la CMV et de sorties raccordées aux écrans de visualisation et une interface apte à générer une fonction F de sélection de vidéo demandant l'affichage d'une vidéo particulière raccordée au CDS par l'intermédiaire du bus avion. Comme on le voit, la différence essentielle entre ce dispositif est celui de l'art antérieur tel qu'exposé en figure 1 est qu'il ne nécessite pas de liaison entre l'interface de sélection et la centrale de mixage vidéo.

Le procédé selon l'invention comprend cinq étapes principales qui sont détaillées ci-dessous. Le procédé peut s'appliquer à différents types de normes aéronautiques. Dans ce qui suit, les différents exemples de mises en oeuvre sont établis selon la norme ARINC 661.

Dans une première étape, L'interface de sélection envoie une requête d'affichage d'une fenêtre W comportant une interface homme-machine IHM et l'emplacement d'une image vidéo V au système de visualisation de cockpit CDS. Lorsque l'on travaille en ARINC 661, la requête demande l'affichage de l'objet noté « externalSource ». Cet objet fait référence à un flux vidéo au travers d'un identifiant unique (paramètre sourceReference de l'ARINC 661). L'objet externalSource de l'ARINC 661 a initialement, dans le cadre de la norme pour objectif de gérer plusieurs flux vidéo entrant dans un CDS. Or, dans le cas de l'utilisation d'une CMV, le CDS ne dispose que d'une entrée et l'objet paraît inutile. Dans le procédé selon l'invention, on utilise donc une extension système du concept d' « externalSource » en utilisant l'objet non pour piloter directement les vidéos entrant dans le CDS mais pour piloter à distance la CMV.

Dans une seconde étape, le système de visualisation de cockpit CDS détermine le positionnement graphique de la fenêtre W, l'interface homme-machine et les paramètres d'affichage de l'image vidéo sur l'écran d'affichage. Pour afficher la vidéo, le CDS définit la zone dans laquelle cette vidéo doit s'afficher par l'identification d'un ensemble de rectangles de coordonnées (Xᵢ, Yᵢ, Wᵢ, Hᵢ), identifie la destination de la vidéo sur l'écran (X, Y, W, H) et met en oeuvre les mécanismes permettant d'y afficher le flux vidéo, à savoir la définition d'un « masque vidéo ».

En ARINC 661, le CDS extrait de l'objet « externalSource » les informations suivantes :
- Les coordonnées (X, Y) et la taille (H, L) de la zone dans laquelle la vidéo doit être affichée ;
- Les transformations géométriques qui doivent être appliquées à la vidéo entrant dans la CMV (rotation, homothétie, translation...)
- L'identifiant du flux vidéo ;

Dans une troisième étape, le système de visualisation de cockpit CDS envoie une demande d'affichage de ladite image vidéo à la centrale de mixage vidéo CMV.

Dans une quatrième étape, la centrale de mixage vidéo CMV sélectionne l'image vidéo à afficher, la met en forme et la positionne en fonction de la demande issue du système de visualisation de cockpit et la lui transmet. La CMV a pour principales tâches de mélanger et de traiter plusieurs vidéos entrantes de manière à produire une vidéo résultante envoyée vers les écrans client du CDS. Les opérations classiquement supportées par une CMV sont :
- Pour chaque flot vidéo : repositionnement, la rotation et le redimensionnement ;
- Le mélange des flots vidéo traités pour bâtir l'image résultante.

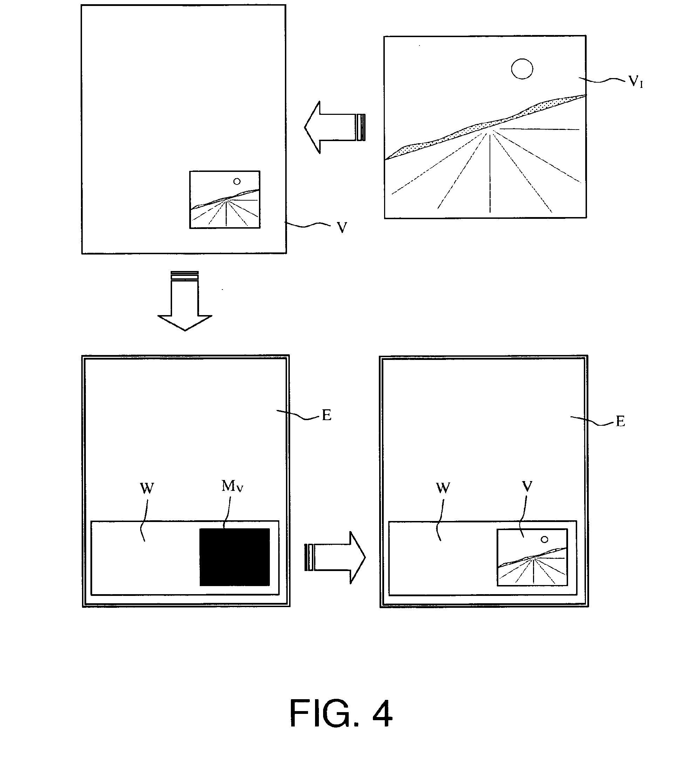

Dans une cinquième étape, le système de visualisation de cockpit CDS reçoit l'image vidéo mise en forme par le CMV et la transmet à l'écran d'affichage dans la fenêtre d'affichage W à l'emplacement choisi. La vidéo issue de la CMV s'affiche alors à la place des rectangles identifiés précédemment. Par exemple, si l'affichage initial du « masque vidéo » est un rectangle d'une couleur spécifique, chaque pixel initial de ce rectangle est remplacé par le pixel équivalent de la vidéo, principe dit du « chroma key ». Dans une implémentation réelle, la vidéo résultante est souvent de la taille du masque vidéo, le reste de la vidéo étant noir. En effet, la plupart du temps, la CMV réduit la taille de la vidéo V, l'objectif fonctionnel de l'ensemble du système étant d'afficher l'ensemble de l'image entrant dans la CMV dans le masque vidéo Mᵥ associé du CDS. Ceci est illustré sur la figure 4 qui montre les quatre étapes de l'incrustation d'une vidéo V sur un écran E : Acquisition de la vidéo V_{I} par la CMV, puis réduction et mise en forme de la vidéo V par la CMV, envoi au CDS de la vidéo et incrustation en lieu et place du masque vidéo sur l'écran E.

Le mécanisme d'affichage de la vidéo dans un CDS peut être appliqué de la même manière dans le cas de plusieurs vidéos entrant dans la CMV. Dans ce cas, la CMV construit une image composite qui est ensuite affichée à l'emplacement des masques vidéo. Ce mécanisme fonctionne exactement de la même manière dans le cas ou plusieurs vidéos potentiellement associées à plusieurs fonctions doivent être affichées : chaque fonction demande l'affichage de son (ses) objet(s) « externalSource ». Le CDS transmet alors les requêtes pour les différents flots vidéo à la CMV, qui réalise alors le mélange de l'ensemble de ces sources.

Il existe par ailleurs une latence entre la requête d'un affichage vidéo émise vers la CMV et l'affichage de ce flux sur l'écran. Cette latence est due à :
- La durée de la communication entre le CDS et la CMV (pour la requête de vidéo)
- La durée de traitement de la CMV (sélection du flux, positionnement sur l'écran et mélange pour obtenir la vidéo résultante)
- La latence de la communication entre la CMV et le CDS (sur le bus vidéo)
- La durée de synchronisation et de traitement de la vidéo par le CDS

Ainsi, pendant une certaine durée, le CDS bascule dans un mode où une vidéo doit être affichée mais aucun signal n'est concrètement reçu ou, si un signal est disponible, il correspond à une configuration vidéo obsolète. Il faut donc déterminer si la vidéo reçue correspond bien à la demande effectuée et gérer l'attente de cette vidéo.

Dans le cas de l'utilisation d'ARINC 661, le premier problème est réglé par un principe d'identifiant et en utilisant le protocole vidéo ARINC 818 voir sur ce sujet : Avionics Digital Video Bus - High Data Rate ARINC 818 draft 4, AEEC/ARINC, 1er août 2006). Lors de l'envoi de la requête vidéo à la CMV, le CDS envoie à la CMV un identifiant unique qui peut être un numéro d'ordre s'incrémentant à chaque nouvelle requête. Lorsque la requête a été prise en compte par la CMV et que la vidéo requise est donc produite, l'identifiant est renvoyé au CDS dans la trame vidéo ARINC 818. Celui-ci peut donc l'afficher en étant sûr de sa pertinence.

La résolution du second problème est basée sur le traitement de l'externalSource. Tant que la vidéo requise n'est pas disponible, le CDS affiche dans la zone vidéo une information prédéfinie qui peut être un rectangle noir, un message, une barre de progression.... Lorsque la vidéo est disponible, l'identifiant unique est reçu dans la trame ARINC 818, elle est immédiatement affichée par le remplacement de l'information prédéfinie par un masque vidéo. Plus généralement, l'identifiant de la requête vidéo peut être utilisé à chaque cycle pour s'assurer de la cohérence entre la configuration des masques vidéo du CDS et celle des sorties de la CMV.

En conclusion, ce procédé présente les avantages suivants :
- Rendre la CMV et le CDS indépendants : la CMV n'a pas besoin de connaître la stratégie de positionnement des fenêtres du CDS ;
- Améliorer la cohérence : le CDS recevant l'ensemble de la demande d'affichage de l'IHM (vidéo incluse), il peut donc synchroniser l'ensemble (et par exemple afficher un message dans la zone vidéo tant que le signal n'est pas disponible) ;
- Amener de nouvelles fonctionnalités : Dans le cas d'une fonction de déplacement appelée « glisser / déposer »gérée par un désignateur graphique de type « souris », le CDS émet à chaque déplacement les nouvelles coordonnées de la vidéo à la CMV, qui peut alors modifier le flux vidéo ;
- Simplifier la centrale de mixage vidéo ;
- Simplifier l'architecture système : les fonctions de sélection n'ont plus besoin d'être connectées directement à la CMV, elles peuvent se contenter d'utiliser la connexion existante au CDS.

## Revendications

1. Procédé de gestion d'un ensemble de visualisation de cockpit comprenant au moins une centrale de mixage vidéo (CMV), un système de visualisation de cockpit (CDS), une interface de sélection de vidéos et un écran d'affichage, la centrale de mixage vidéo étant reliée par un bus vidéo au système de visualisation de cockpit et l'interface de sélection de vidéos étant reliée au système de visualisation de cockpit par un bus avion, **caractérisé en ce que** la génération, par le système de visualisation de cockpit, d'une image graphique comportant une fenêtre d'affichage comprenant une image vidéo comporte les étapes suivantes :
• L'interface de sélection envoie une requête d'affichage d'une fenêtre (W) comportant une interface homme-machine (IHM) et l'emplacement d'une image vidéo (V) au système de visualisation de cockpit (CDS), les coordonnées de l'interface et de l'image vidéo étant définies en coordonnées relatives à la fenêtre d'affichage ;
• Le système de visualisation de cockpit (CDS) détermine le positionnement graphique de la fenêtre (W), l'interface homme-machine et les paramètres d'affichage de l'image vidéo sur l'écran d'affichage en coordonnées absolues par rapport à l'écran d'affichage ;
• Le système de visualisation de cockpit (CDS) envoie une demande d'affichage de ladite image vidéo à la centrale de mixage vidéo (CMV) en coordonnées absolues ;
• La centrale de mixage vidéo (CMV) sélectionne l'image vidéo à afficher, la met en forme et la positionne en coordonnées absolues en fonction de la demande issue du système de visualisation de cockpit et la lui transmet ;
• Le système de visualisation de cockpit (CDS) reçoit l'image vidéo mise en forme et la transmet à l'écran d'affichage dans la fenêtre d'affichage (W) à l'emplacement choisi.

2. Procédé de gestion d'un ensemble de visualisation de cockpit selon la revendication 1, **caractérisé en ce que** les paramètres d'affichage comprennent la définition d'un masque vidéo.

3. Procédé de gestion d'un ensemble de visualisation de cockpit selon l'une des revendications 1 ou 2, **caractérisé en ce que**, lorsque les dialogues entre la centrale de mixage vidéo (CMV), le système de visualisation de cockpit (CDS) et l'interface de sélection de vidéos sont effectués selon la norme aéronautique « ARINC 661 », les requêtes d'affichage d'IHM incluant l'aspect vidéo sont effectués par le biais de l'objet appelé « externalSource » selon la norme ARINC 661.

4. Procédé de gestion d'un ensemble de visualisation de cockpit selon l'une des revendications précédentes, **caractérisé en ce que**, lorsque le système de visualisation de cockpit (CDS) envoie une demande d'affichage d'une image vidéo à la centrale de mixage vidéo (CMV), il envoie également un identifiant unique spécifique à ladite demande et lorsque la centrale de mixage vidéo (CMV) transmet la dite image vidéo au système de visualisation de cockpit, le dit identifiant est également retransmis.

5. Procédé de gestion d'un ensemble de visualisation de cockpit selon l'une des revendications précédentes, **caractérisé en ce que**, tant que l'image vidéo n'est pas transmise par la centrale de mixage vidéo (CMV) au système de visualisation de cockpit (CDS), celui-ci affiche à l'emplacement choisi une information pré-définie.

## Claims

1. A process for controlling a cockpit display assembly comprising at least one video mixing unit (VMU), a cockpit display system (CDS), a video selection interface and a display screen, the video mixing unit being connected by a video bus to the cockpit display system and the video selection interface being connected to the cockpit display system by an airplane bus, **characterised in that** the generation by the cockpit display system of a graphic image including a display window including a video image comprises the following steps:
• the selection interface sends a display request from a window (W) comprising a man-machine interface (MMI) and the location for a video image (V) to the cockpit display system (CDS), the coordinates of the interface and of the video image being defined as coordinates relative to the display window;
• the cockpit display system (CDS) determines the graphical positioning of the window (W), the man-machine interface and the display parameters of the video image on the display screen in absolute coordinates relative to the display screen;
• the cockpit display system (CDS) sends a display request of said video image to the video mixing unit (VMU) in absolute coordinates;
• the video mixing unit (VMU) selects, formats and positions in absolute coordinates the video image to be displayed as a function of the request originating from the cockpit display system and sends said image thereto;
• the cockpit display system (CDS) receives the formatted video image and sends it to the display screen in the display window (W) at the selected location.

2. The process for controlling a cockpit display assembly according to claim 1, **characterised in that** the display parameters include the definition of a video mask.

3. The process for controlling a cockpit display assembly according to claim 1 or 2, **characterised in that**, when the dialogues between the video mixing unit (VMU), the cockpit display system (CDS) and the video selection interface are performed according to aeronautical standard "ARINC 661", the MMI display requests including the video view are performed using the object referred to as "externalSource" according to standard ARINC 661.

4. The process for controlling a cockpit display assembly according to any one of the previous claims, **characterised in that**, when the cockpit display system (CDS) sends a video image display request to the video mixing unit (VMU), it also sends a unique identifier which is specific to said request, and when the video mixing unit (VMU) sends said video image to the cockpit display system, said identifier is also retransmitted.

5. The process for controlling a cockpit display assembly according to any one of the previous claims, **characterised in that**, whilst the video image is not transmitted by the video mixing unit (VMU) to the cockpit display system (CDS), said system displays a predetermined item of information at a selected location.

## Patentansprüche

1. Verfahren zum Steuern eines Cockpit-Anzeigebaugruppe, die Folgendes umfasst: wenigstens eine Videomischeinheit (VME), ein Cockpit-Anzeigesystem (CAS), eine Videoauswahlschnittstelle und einen Anzeigeschirm, wobei die Videomischeinheit über einen Videobus mit dem Cockpit-Anzeigesystem verbunden ist und die Videoauswahlschnittstelle mit dem Cockpit-Anzeigesystem über einen Flugzeugbus verbunden ist, **dadurch gekennzeichnet, dass** die Erzeugung eines Grafikbildes mit Anzeigefenster mit einem Videobild durch das Cockpit-Anzeigesystem die folgenden Schritte beinhaltet:
• die Auswahlschnittstelle sendet eine Anzeigeanforderung von einem Fenster (W), das eine Mensch-Maschine-Schnittstelle (MMS) und die Stelle für ein Videobild (V) umfasst, zum Cockpit-Anzeigesystem (CAS), wobei die Koordinaten der Schnittstelle und des Videobildes in Koordinaten relativ zum Anzeigefenster definiert sind;
• das Cockpit-Anzeigesystem (CAS) ermittelt die grafische Positionierung des Fensters (W), die Mensch-Machine-Schnittstelle und die Anzeigeparameter des Videobildes auf dem Anzeigeschirm in absoluten Koordinaten in Bezug auf den Anzeigeschirm;
• das Cockpit-Anzeigesystem (CAS) sendet eine Anforderung zum Anzeigen des Videobildes zur Videomischeinheit (VME) in absoluten Koordinaten;
• die Videomischeinheit (VME) wählt, formatiert und positioniert nach absoluten Koordinaten das anzuzeigende Videobild in Abhängigkeit von der vom Cockpit-Anzeigesystem kommenden Anforderung und sendet das Bild zu diesem;
• das Cockpit-Anzeigesystem (CAS) empfängt das formatierte Videobild und sendet es zum Anzeigeschirm im Anzeigefenster (W) an der gewählten Stelle.

2. Verfahren zum Steuern einer Cockpit-Anzeigebaugruppe nach Anspruch 1, **dadurch gekennzeichnet, dass** die Anzeigeparameter die Definition einer Videomaske beinhalten.

3. Verfahren zum Steuern einer Cockpit-Anzeigebaugruppe nach Anspruch 1 oder 2, **dadurch gekennzeichnet, dass**, wenn die Dialoge zwischen der Videomischeinheit (VME), dem Cockpit-Anzeigesystem (CAS) und der Videoauswahlschnittstelle gemäß der aeronautischen Norm "ARINC 661" erfolgen, die MMS-Anzeigeanforderungen mit der Videoansicht unter Verwendung des Objekts erfolgen, das gemäß der Norm ARINC 661 als "externalSource" bezeichnet wird.

4. Verfahren zum Steuern einer Cockpit-Anzeigebaugruppe nach einem der vorherigen Ansprüche, **dadurch gekennzeichnet, dass** das Cockpit-Anzeigesystem (CAS), wenn es eine Anforderung zum Anzeigen eines Videobildes zur Videomischeinheit (VME) sendet, es auch eine eindeutige Kennung sendet, die für diese Anforderung spezifisch ist, und wenn die Videomischeinheit (VME) das Videobild zum Cockpit-Anzeigesystem sendet, diese Kennung ebenfalls neu gesendet wird.

5. Verfahren zum Steuern einer Cockpit-Anzeigebaugruppe nach einem der vorherigen Ansprüche, **dadurch gekennzeichnet, dass** solange das Videobild nicht von der Videomischeinheit (VME) zum Cockpit-Anzeigesystem (CAS) gesendet wird, letzteres eine vorbestimmte Information an einer gewählten Stelle anzeigt.
